# EUROPÄISCHE PATENTSCHRIFT

(11) **EP 3 844 028 B1**
(45) Veröffentlichungstag und Bekanntmachung des Hinweises auf die Patenterteilung: **15.04.2026**
(21) Anmeldenummer: 19758370.1
(22) Anmeldetag: 19.08.2019
(51) Int. Cl.: B60Q 1/26, B60Q 1/30, B60R 13/00, B60Q 1/00

(54) **BELEUCHTUNGSVORRICHTUNG FÜR EIN KRAFTFAHRZEUG**
LIGHTING APPARATUS FOR A MOTOR VEHICLE
DISPOSITIF D'ÉCLAIRAGE DESTINÉ À UN VÉHICULE AUTOMOBILE

(30) Priorität: 30.08.2018 DE 102018214790
(43) Veröffentlichungstag der Anmeldung: 07.07.2021
(73) Patentinhaber: VOLKSWAGEN AKTIENGESELLSCHAFT, 38440 Wolfsburg (DE)
(72) Erfinder: HANS, Sebastian, 38446 Wolfsburg (DE); RENZ DE FONT, Oliver Jerome, 38440 Wolfsburg (DE)
(86) Internationale Anmeldenummer: PCT/EP2019/072179
(87) Internationale Veröffentlichungsnummer: WO 2020/043532

(56) Entgegenhaltungen:
- CA-A1- 2 115 790
- JP-A- 2012 113 970
- JP-A- S6 460 447
- US-A1- 2014 240 999

## Beschreibung

Die Erfindung betrifft eine Beleuchtungsvorrichtung für ein Kraftfahrzeug mit den Merkmalen vom Oberbegriff des Patentanspruchs 1.

Derartige Beleuchtungsvorrichtungen sind aus dem allgemeinen Stand der Technik bestens bekannt. Sie können beispielsweise als Heckleuchten oder auch als Scheinwerfer ausgebildet sein.

Es ist auch bekannt, Markenembleme im Front- und Heckbereich von Kraftfahrzeugen zur Herkunftsbezeichnung eines Kraftfahrzeugs anzubringen. Die Markenembleme können beispielsweise auf der Front- und/oder Heckklappe und/oder im Bereich des Kühlergrills des Kraftfahrzeugs befestigt sein.

In jüngerer Zeit ist auch vermehrt das Bedürfnis erkennbar, Markenembleme am Kraftfahrzeug zu beleuchten. So ist beispielsweise aus der DE 10 2014 018 625 A1 eine Emblemanordnung für ein Fahrzeug bekannt geworden, bei der ein Markenemblem, ein Lichtleiter, ein Lichtleiterträgerteil und ein Markenemblemträgerteil sandwichartig angeordnet sind. Der Lichtleiter und das Lichtleiterträgerteil sind zwischen dem Markenemblem und dem Markenemblemträgerteil angeordnet. Im Lichtleiterträgerteil sind mehrere Lichtquellen in Form von Leuchtdioden (LEDs) aufgenommen. Das Markenemblemträgerteil weist an seiner Unterseite Befestigungselemente auf, mit denen die Emblemanordnung an einem Fahrzeugbauteil befestigt werden kann.

In der DE 10 2014 004 334 A1 ist ein Beleuchtungselement für ein Fahrzeug beschrieben, welches ein äußeres Zierteil mit einem Markenemblem aufweist. Unter dem Zierteil ist ein scheibenartiges Leuchtmittel angeordnet, welches eine oder mehrere Leuchtdioden, insbesondere organische Leuchtdioden (OLEDs) umfassen kann. Rückseitig wird das Beleuchtungselement durch eine Abschlussanordnung abgeschlossen und ist als Ganzes in einen Ausschnitt eines Heckdeckels eines Kraftfahrzeugs integrierbar. Dort ist das Beleuchtungselement mit einer Schließanordnung einer Vorrichtung zum Öffnen oder Entriegeln des Kraftfahrzeugs gekoppelt. Mittels des Beleuchtungselementes sind in Abhängigkeit eines Öffnungs- und Schließvorgangs unterschiedliche Lichtfarben ausgebbar.

Die JP S64 60447 A beschreibt eine Beleuchtungsvorrichtung, welche im Frontgrill eines Kraftfahrzeugs zwischen zwei Scheinwerfern angeordnet ist. Konkret weist die Beleuchtungsvorrichtung ein Gehäuse auf, welches nach außen von einer Lichtscheibe abgeschlossen ist. Am Gehäuse ist ferner eine lichtleitende Platte gehalten, in die mittig Licht von Leuchtmitteln einkoppelbar ist. Die lichtleitende Platte ist von einer Zwischenlichtscheibe überdeckt. Des Weiteren ist die Lichtscheibe an ihrer Innenseite mit einer Bedruckung versehen. Durch die Bedruckung wird ein Markenname oder -emblem ausgebildet. Bei Einschaltung der Leuchtmittel ist der Frontgrill bei Dunkelheit auch zwischen den Scheinwerfern gleichmäßig beleuchtbar.

Der JP 2012 113970 A ist eine Zierleiste für den Frontgrill eines Kraftfahrzeugs zu entnehmen. Die Zierleiste weist ein Gehäuse auf, an dem zwei Lichtleiter gehalten sind. In die Lichtleiter wird seitlich Licht von Leuchtmitteln eingekoppelt. Das Gehäuse ist nach vorne durch eine Lichtscheibe abgedeckt. Die Lichtscheibe weist einen zentralen Bereich auf, in der eine Öffnung eingebracht ist. Die Öffnung dient zur Montage eines Markenemblems.

Aus der die Merkmale vom Oberbegriff des Anspruchs 1 aufweisenden CA 2 115 790 A1 ist eine Abschlussscheibe eines Fahrtrichtungsanzeigers an einem Kraftfahrzeug bekannt. Die Abschlussscheibe weist eine als Vertiefung ausgebildete Befestigungstelle auf, die an den Seiten mit Aussparungen versehen ist. In die Befestigungsstelle ist ein lösbares Einsatzteil eingesetzt und über Federklammern mit den Aussparungen verrastet. Das Einsatzteil kann transparent ausgebildet und mit Zeichen, Bildern oder dergleichen versehen sein.

Schließlich wird in der US 2014/240999 A1 eine beleuchtete Markenemblemanordnung beschrieben. Diese umfasst mehrere Leuchtmittel auf einer Platine, welche von einer Chromschicht und einer Lichtscheibe abgedeckt sind. Die Lichtscheibe weist ein Markenemblem auf.

Vor dem Hintergrund des genannten Standes der Technik liegt der vorliegenden Erfindung die Aufgabe zu Grunde, eine Beleuchtungsvorrichtung bereitzustellen, mit der neben der Bereitstellung von herkömmlichen Lichtfunktionen, wie beispielsweise Schlusslicht oder Abblendlicht auch die Funktion eines Herkunftshinweises realisiert werden kann.

Vorliegende Aufgabe wird mit einer Beleuchtungsvorrichtung mit den Merkmalen von Patentanspruch 1 gelöst. Vorteilhafte Ausbildungen beziehungsweise Weiterbildungen der Erfindung sind den abhängigen Ansprüchen entnehmbar.

Die Erfindung geht zunächst aus von einer Beleuchtungsvorrichtung für ein Kraftfahrzeug, mit einem Gehäuse und mit wenigstens einer das Gehäuse nach außen abschließenden Lichtscheibe. Durch die Lichtscheibe können Lichtstrahlen von hinter der Lichtscheibe angeordneten Leuchtmitteln nach außen hindurchtreten und somit zur Realisierung einer bestimmten Lichtfunktion beitragen. Die Lichtfunktion kann beispielsweise ein Schlusslicht, ein Abblendlicht oder auch ein Rücklicht sein.

Erfindungsgemäß wird außen an der Lichtscheibe ein Bauteil gehalten, welches ein Markenemblem aufweist. Dies erfolgt derart, dass durch das Bauteil die Lichtscheibe teilweise überdeckt wird.

Durch die genannten Merkmale werden die Grundvoraussetzungen dafür geschaffen, dass mit der Beleuchtungsvorrichtung zum einen eine herkömmliche Lichtfunktion bereitgestellt werden kann und zum anderen zusätzlich ein Herkunftshinweis geschaffen werden kann. Durch die teilweise Überdeckung der Lichtscheibe durch das Bauteil wird zusätzlich auch noch die Voraussetzung dafür geschaffen, bei Bedarf und entsprechender Ausgestaltung der Beleuchtungsvorrichtung, das Markenemblem beleuchten zu können.

Erfindungsgemäß wird dies dann dadurch realisiert werden, wenn das Bauteil, welches das Markenemblem ausbildet, lichtdurchlässige und lichtundurchlässige Bereiche aufweist und wenn ein Teil der hinter der Lichtscheibe angeordneten Leuchtmittel Bestandteil einer gesonderten Platine ist, welche im Bereich des Bauteils angeordnet ist.

Auf diese Weise kann bei Bedarf beziehungsweise bei Kundenwunsch die Beleuchtungsvorrichtung um das entsprechend durchleuchtbare Bauteil mit dem Markenemblem sowie die gesonderte Platine ergänzt werden.

Falls eine Beleuchtung des Markenemblems nicht gewünscht ist, so kann das Bauteil, welches das Markenemblem aufweist in seiner Gesamtheit lichtundurchlässig ausgebildet sein und die gesonderte Platine kann entfallen.

Bei einer gewollten Beleuchtung des Markenemblems hingegen kann auf ein gesondertes Gehäuse und eine gesonderte Lichtscheibe zur Realisierung eines beleuchteten Markenemblems verzichtet werden. Die Erfindung nutzt hier das bereits vorhandene Gehäuse und die vorhandene Lichtscheibe der Beleuchtungsvorrichtung. Somit können Bauteile und Kosten gespart werden.

Weiterhin ist es von Vorteil, wenn gemäß einer anderen Ausbildung der Erfindung die Stromversorgung der gesonderten Platine mit der Stromversorgung der Beleuchtungsvorrichtung parallelgeschaltet ist. Die Stromversorgung, die zur Realisierung wenigstens einer herkömmlichen Lichtfunktion dient wird also auch zur Stromversorgung der gesonderten Platine "angezapft". Auf diese Weise können eine für die Beleuchtungsvorrichtung ohnehin vorhandene Vorschaltelektronik mitgenutzt und der Schaltungsaufwand reduziert werden.

Erfindungsgemäß sind die auf der gesonderten Platine angeordneten Leuchtmittel von einem Rahmen umgeben. Der Rahmen ist bis an die Lichtscheibe herangeführt. Dies erfolgt derart, dass im Bereich des das Markenemblem aufweisenden Bauteils, und zwar hinter diesem, eine gesonderte Lichtkammer gebildet wird. Auf diese Weise kann eine gute Ausleuchtung beziehungsweise gute Hinterleuchtung des Markenemblems realisiert werden.

Um die Beleuchtung des Markenemblems besonders homogen erscheinen zu lassen, sind gemäß einer anderen Ausbildung der Erfindung die Platine und der Rahmen weiß ausgebildet. Die weiße Ausbildung kann beispielsweise durch eine weiße Beschichtung realisiert sein. Es ist auch denkbar, dass für die Platine und/oder den Rahmen weißes Material, beispielsweise weißer Kunststoff verwendet wird.

Die diffuse Streuung innerhalb der Lichtkammer kann noch dadurch verstärkt werden, indem wenigstens ein Teil der auf der gesonderten Platine angeordneten Leuchtmittel in Richtung des Rahmens, also zur Seite hin abstrahlt.

Eine andere Weiterbildung der Erfindung schlägt vor, dass durch die Lichtscheibe ein Aufnahmebereich für das Bauteil gebildet ist, der eine vertiefte Montagefläche aufweist.

Auf diese Weise können "Befestigungsspuren" des Bauteils gut kaschiert werden. Wird das Bauteil beispielsweise durch Kunststoffschweißen (Reibschweißen) an der Montagefläche befestigt, so sind seitlich austretendes, überschüssiges Material beziehungsweise eine Schweißwulst für einen Betrachter nicht sichtbar.

In zweckmäßiger Ausgestaltung der Erfindung wird vorgeschlagen, dass der Aufnahmebereich, das Bauteil mit dem Markenemblem und die gesonderte Platine kreisrund und im Umriss in etwa gleich groß ausgebildet sind. Hierdurch können die Abstimmung dieser Teile optimiert und die Effektivität der Hinterleuchtung gesteigert werden.

Durch die Erfindung soll auch ein Kraftfahrzeug unter Schutz gestellt werden, welches wenigstens eine erfindungsgemäße Beleuchtungsvorrichtung aufweist.

Ein derartiges Kraftfahrzeug kann dadurch weitergebildet sein, dass die Beleuchtungsvorrichtung an einer Klappe des Kraftfahrzeugs montiert und länglich ausgebildet ist, wobei sich die Beleuchtungsvorrichtung über die gesamte Breite der Klappe erstreckt. Die Beleuchtungsvorrichtung ist dabei also horizontal ausgerichtet.

Ein derartig ausgestaltetes Kraftfahrzeug weist ein äußerst markantes Erscheinungsbild auf.

Schließlich schlägt eine zweckmäßige Weiterbildung des Kraftfahrzeugs noch vor, dass die Beleuchtungsvorrichtung mit ihrem Gehäuse in eine Vertiefung der Klappe eingelassen ist. Die Vertiefung ist vorzugsweise in die Klappe eingeprägt und erstreckt sich über die gesamte Breite der Klappe. Auf diese Weise kann das ästhetische Erscheinungsbild des Kraftfahrzeugs und die Integration der Beleuchtungsvorrichtung im Kraftfahrzeug verbessert werden.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: eine Heckansicht eines Kraftfahrzeugs mit einer erfindungsgemäßen Beleuchtungsvorrichtung,
- Fig. 2: eine Schnittansicht gemäß Schnittverlauf II aus Fig. 1,
- Fig. 3: eine perspektivische Darstellung der gesonderten Platine mit samt Rahmen und
- Fig. 4: eine Detaildarstellung gemäß Detail IV aus Fig. 2.

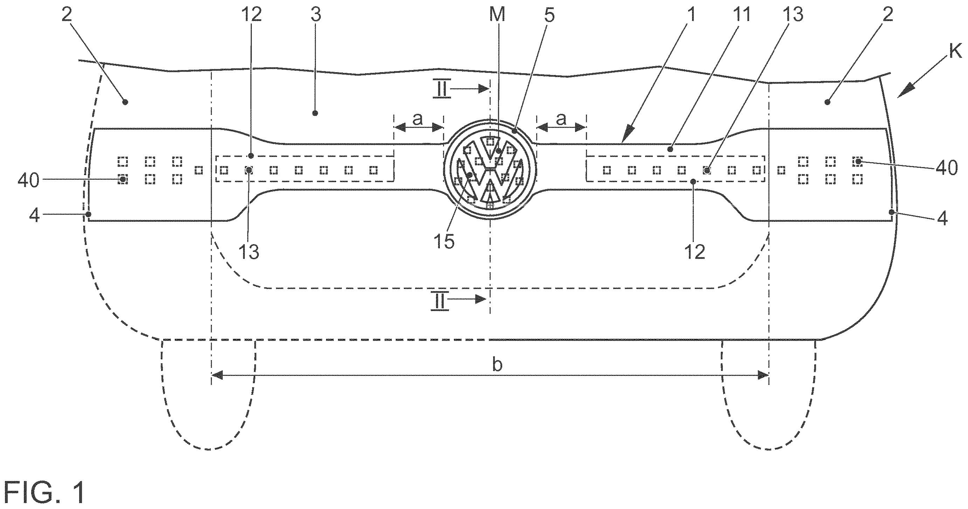

Es wird zunächst auf die Fig. 1 Bezug genommen. In dieser Figur ist die Heckansicht eines Kraftfahrzeugs K schematisch angedeutet. Das Kraftfahrzeug K weist zwei seitliche, als Heckleuchten ausgebildete Beleuchtungsvorrichtungen 4 auf. Die Beleuchtungsvorrichtungen 4 sind als sogenannte SBBR-Leuchten ausgebildet, die die Lichtfunktionen Schlusslicht, Bremslicht, Blinklicht und Rücklicht realisieren können. Die Beleuchtungsvorrichtungen 4 sind an einer Karosserie 2 des Kraftfahrzeugs montiert. Zwischen den Beleuchtungsvorrichtungen 4 erstreckt sich eine längliche Beleuchtungsvorrichtung 1, welche sich vorzugsweise über eine gesamte Breite b einer Klappe 3 erstreckt. Die Beleuchtungsvorrichtung 1 ergänzt die Beleuchtungsvorrichtungen 4 im mittleren Bereich des Kraftfahrzeughecks und liefert auch die Lichtfunktion eines Schluss- und/oder Bremslichtes.

Zur Bereitstellung der erwähnten Lichtfunktionen weisen die Beleuchtungsvorrichtungen 4 Leuchtmittel 40 und die Beleuchtungsvorrichtung 1 Leuchtmittel 13 auf. Die Leuchtmittel 13 und 40 können als Leuchtdioden (LEDs) ausgebildet sein. Es ist auch der Einsatz anderer Leuchtmittel denkbar. Beispielsweise können in der Beleuchtungsvorrichtung 1 auch längliche Lichtleiter verwendet werden, in die stirnseitig das Licht von Leuchtdioden eingekoppelt und über die Länge der Lichtleiter hinweg in geeigneter Weise wieder ausgekoppelt wird.

Die Leuchtmittel 13 sind auf gestrichelt angedeuteten Platinen 12 angeordnet. Diese erstrecken sich jeweils ausgehend von einer Beleuchtungsvorrichtung 4 in Richtung eines mittig auf der Beleuchtungsvorrichtung 1 angeordneten Bauteils 5. Das Bauteil 5 weist ein Markenemblem M auf bzw. bildet ein solches aus. Beidseitig vom Bauteil 5 weisen die Platinen 12 einen Abstand a auf. Der Abstand a beträgt vorzugsweise wenigstens in etwa 75 Millimeter.

Durch die Anordnung der Leuchtmittel 13 beidseitig des Bauteils 5 kann bei Aktivierung der Leuchtmittel 13 der Eindruck eines sich über einen Großteil der Klappe 3 erstreckenden Lichtbandes erzeugt werden.

Das das Markenemblem M aufweisende Bauteil 5 ist bereichsweise lichtdurchlässig ausgebildet. Es kann durch hinter dem Bauteil 5 angeordnete Leuchtmittel 15, welche ebenfalls vorzugsweise als Leuchtdioden ausgebildet sind, hinterleuchtet werden. Dieses soll später noch näher erläutert werden.

In Abweichung vom Ausführungsbeispiel ist es auch denkbar, dass eine vergleichbare Anordnung an der Front des Kraftfahrzeugs K angeordnet ist. In diesem Fall sind die Beleuchtungsvorrichtungen 4 als Scheinwerfer und die Klappe 3 als Frontklappe ausgebildet.

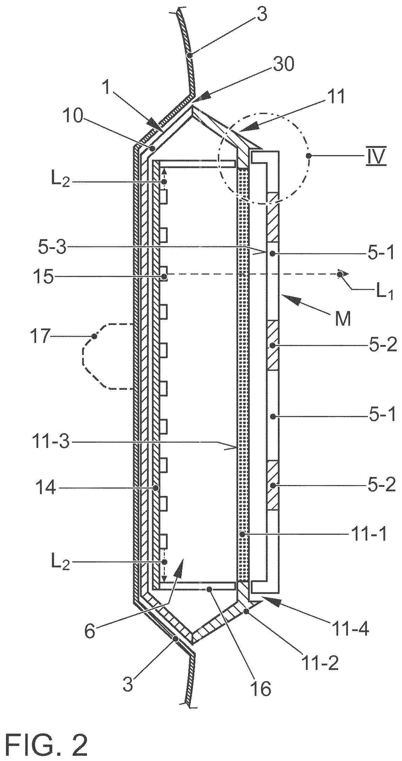

Anhand der Fig. 2 ist der Aufbau im Bereich des Bauteils 5 genau zu erkennen. Die Beleuchtungsvorrichtung 1 weist ein rückseitiges Gehäuse 10 auf. Das Gehäuse 10 erstreckt sich also über die Breite b der Klappe 3 und ist in eine eingeprägte Vertiefung 30 der Klappe 3 eingelassen. Die Beleuchtungsvorrichtung 1 kann über gestrichelt angedeutete Befestigungsmittel 17 an der Klappe 3 befestigt sein.

Nach außen, also entgegen einer gewöhnlichen Fahrtrichtung, ist das Gehäuse 10 durch eine durchgehende Lichtscheibe 11 abgeschlossen.

Sowohl das Gehäuse 10 als auch die Lichtscheibe 11 können aus Kunststoff sein, wobei diese Bauteile vorzugsweise mittels Kunststoffschweißen (Reibschweißen) miteinander verbunden sind.

Die Lichtscheibe 11 ist insbesondere als Zweikomponentenbauteil ausgebildet. Sie weist einen zentralen lichtdurchlässigen Bereich 11-1 und daran beidseitig anschließende, lichtundurchlässige Bereiche 11-2 auf. Der lichtdurchlässige Bereich 11-1 wird durch eine erste Komponente und die lichtundurchlässigen Bereiche 11-2 werden durch eine zweite Komponente gebildet.

Auf Grund der Lichtdurchlässigkeit des Bereiches 11-1 können Lichtstrahlen L1 der hinter dem Bauteil 5 angeordneten Leuchtmittel 15 bzw. Lichtstrahlen der Leuchtmittel 13 durch die Lichtscheibe 11 nach außen hindurchtreten.

Durch das Gehäuse 10 und die Lichtscheibe 11 wird also eine in sich geschlossene Beleuchtungsvorrichtung 1 ausgebildet, welche sich über die Breite B der Klappe 3 erstreckt.

Wie anhand der Figur ferner ersichtlich wird, ist im mittleren Bereich der Beleuchtungsvorrichtung 1 auf der Lichtscheibe 11 nun zusätzlich noch das Bauteil 5 aufgebracht, welches auch das Markenemblem M ausbildet.

Konkret ist das Bauteil 5 ein im Umriss kreisrundes Bauteil. Es ist ebenfalls vorzugsweise als Zweikomponentenbauteil ausgebildet, mit lichtdurchlässigen Bereichen 5-1 und mit lichtundurchlässigen Bereichen 5-2. Die lichtdurchlässigen Bereiche 5-1 und die lichtundurchlässigen Bereiche 5-2 werden durch unterschiedliche Materialkomponenten ausgebildet. Das Markenemblem M wird insbesondere durch die lichtundurchlässigen Bereiche ausgebildet.

Das Bauteil 5 ist so auf der Lichtscheibe 11 befestigt, dass es mit einer dem lichtdurchlässigen Bereich 11-1 der Lichtscheibe 11 zugewandten Oberfläche 5-3 einen Abstand aufweist. Der Abstand kann vorzugsweise wenige Millimeter aufweisen.

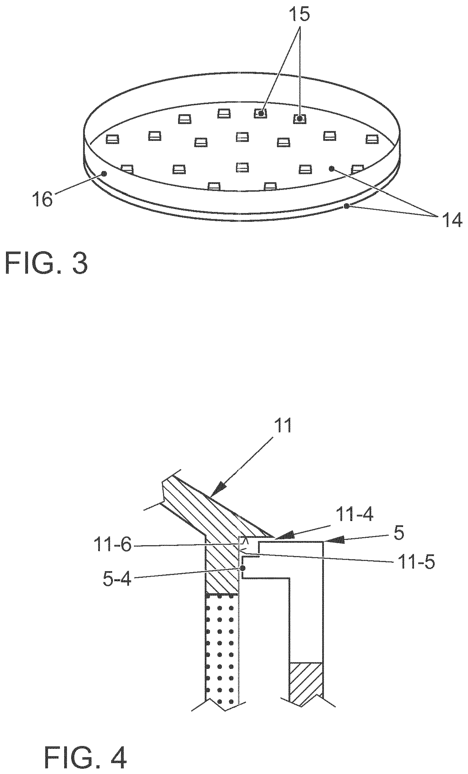

Zur Befestigung des Bauteils 5 ist die Lichtscheibe 11 mit einem speziellen, ebenfalls kreisrunden Aufnahmebereich 11-4 ausgestattet. Der Aufnahmebereich 11-4 weist eine vertiefte Montagefläche 11-5 beziehungsweise Auflagefläche für das Bauteil 5 auf (vgl. Fig. 4). Die dadurch erreichten Vorteile werden später noch erläutert.

Im Bereich des Aufnahmebereichs 11-4 ist zwischen der Lichtscheibe 11 und dem Gehäuse 10 eine gesonderte Platine 14 am Gehäuse 10 angebracht. Auf der Platine 14 sind die bereits erwähnten Leuchtmittel 15 angeordnet. Ferner ist ersichtlich, dass die Platine 14 beziehungsweise die Leuchtmittel 15 von einem umlaufenden Rahmen 16 umgeben sind. Der Rahmen 16 ist von hinten bis an die Lichtscheibe 11 herangeführt. Auf diese Weise entsteht im Bereich des Bauteils 5 hinter der Lichtscheibe 11 eine gesonderte Lichtkammer 6.

Das gezeigte Ausführungsbeispiel stellt eine Ausstattungsvariante dar, bei der das durch das Bauteil 5 gebildete Markenemblem M hinterleuchtet werden soll. Durch die gesonderte Platine 14 und die gebildete, gesonderte Lichtkammer 6 kann mit Lichtstrahlen L1 der Leuchtmittel 15 eine sehr effektive Hinterleuchtung des Markenemblems M realisiert werden.

Zur Intensivierung der Lichtausbeute und der Erhöhung einer diffusen Lichtreflexion innerhalb der Lichtkammer 6 sind die Platine 14 und auch der umlaufende Rahmen 16 weiß ausgebildet. Dazu sind diese aus weißem Material und/oder mit einer weißen Beschichtung versehen.

Zur Erhöhung einer diffusen Lichtreflexion wird ferner vorgeschlagen, außenseitige Leuchtmittel 15, d. h. also dem Rahmen 16 direkt benachbarte Leuchtmittel 15 als seitlich abstrahlende Leuchtmittel, beispielsweise als sogenannte Side-LEDs auszubilden. Diese können dann Lichtstrahlen L2 seitlich in Richtung des Rahmens 16 ausstrahlen, was zu einer erhöhten diffusen Reflexion dieser Lichtstrahlen und zu einer Erhöhung eines homogenen Lichterscheinungsbildes führt. Zur Optimierung einer diffusen Lichtstreuung ist es auch möglich, auf Oberflächen 5-3 und/oder 11-3 des Bauteils 5 und/oder der Lichtscheibe 11 Narbungen beziehungsweise Störstellen bei der Herstellung aufzubringen.

Alternativ oder zusätzlich können auf den Oberflächen 5-3 und/oder 11-3 lichtstreuende Folien, beispielsweise in der Farbe Lila aufgebracht werden. Es ist denkbar, die Folien auch nur bedarfsweise an bestimmten Stellen aufzubringen.

Wie bereits erwähnt, ist der Bereich 11-1 lichtdurchlässig. Zu diesem Zweck kann der Bereich 11-1 transparent ausgebildet sein. Es ist aber auch denkbar, den Bereich 11-1 lediglich transluzent (lichtdurchscheinend) auszubilden. Dafür kann der Bereich 11-1 beispielsweise in einem milchigen Werkstoff hergestellt sein.

Anhand der Fig. 3 wird die gesonderte Platine 14 nochmals perspektivisch dargestellt. Hier ist die kreisrunde Form der Platine 14 mit den verteilt angeordneten Leuchtmitteln 15 und dem umlaufenden Rahmen 16 gut erkennbar. Es führt zu einer guten Abstimmung zwischen dem Bauteil 5 und der Platine 14, wenn diese Bauteile im Umriss in etwa gleich groß sind.

Anhand der Fig. 4 soll nochmals auf die Befestigung des Bauteils 5 im Aufnahmebereich 11-4 eingegangen werden. Hieran ist gut ersichtlich, dass der Aufnahmebereich 11-4 eine zurückversetzte beziehungsweise vertiefte Montagefläche 11-5 aufweist. Senkrecht zur Montagefläche 11-5 erstreckt sich seitlich umlaufend eine Seitenwandung 11-6.

Das Bauteil 5 weist randseitig umlaufend einen Montagevorsprung 5-4 auf. Der Montagevorsprung 5-4 liefert eine Kontaktfläche für die Montagefläche 11-5 beim Verbinden dieser Bauteile mittels Kunststoffverschweißung (Reibschweißen). Dabei gegebenenfalls randseitig austretendes Material wird durch die umlaufende Seitenwandung 11-6 kaschiert und kann durch einen Betrachter nicht gesehen werden.

Es ist sehr zweckmäßig, wenn die Platine 14 mit der Stromversorgung der genannten Platinen 12 und/oder auch mit der Stromversorgung der Beleuchtungsvorrichtungen 4 parallelgeschaltet wird. So kann eine ohnehin für die Beleuchtungsvorrichtungen 1 und 4 notwendige Vorschaltelektronik auch von der Platine 14 mitgenutzt werden.

Schließlich soll noch darauf hingewiesen werden, dass durch die vorliegende Erfindung auch die Möglichkeit besteht, als Ausstattungsvariante statt des Bauteils 5 ein nicht lichtdurchlässiges Bauteil gleicher Größe einzusetzen, welches ebenfalls ein Markenemblem aufweist. Für diesen Zweck braucht also lediglich das Bauteil 5 ausgetauscht zu werden. Die Größe und Ausbildung des Aufnahmebereichs 11-4 kann unverändert bleiben, ebenso die Ausbildung des Gehäuses 10 und der Lichtscheibe 11. Da in dieser Ausstattungsvariante eine Hinterleuchtung eines Markenemblems nicht gewünscht ist, kann ohne Veränderung der anderen Bauteile auch die Verwendung der Platine 14 entfallen.

### Bezugszeichenliste

- 1: Beleuchtungsvorrichtung
- 2: Karosserie
- 3: Klappe
- 4: Beleuchtungsvorrichtungen
- 5: Markenemblem aufweisendes Bauteil
- 5-1: lichtdurchlässige Bereiche (erste Komponente)
- 5-2: lichtundurchlässige Bereiche (zweite Komponente)
- 5-3: Oberfläche
- 5-4: Montagevorsprung
- 6: gesonderte Lichtkammer
- 10: Gehäuse
- 11: Lichtscheibe
- 11-1: lichtdurchlässiger Bereich (erste Komponente)
- 11-2: lichtundurchlässige Bereiche (zweite Komponente)
- 11-3: Oberfläche
- 11-4: Aufnahmebereich
- 11-5: Montagefläche
- 11-6: Seitenwandung
- 12: Platinen
- 13: Leuchtmittel
- 14: gesonderte Platine
- 15: Leuchtmittel
- 16: Rahmen
- 17: Befestigungsmittel
- 30: Vertiefung
- 40: Leuchtmittel

- a: Abstand
- b: Breite
- K: Kraftfahrzeug
- L1, L2: Lichtstrahlen
- M: Markenemblem

## Patentansprüche

1. Beleuchtungsvorrichtung (1) für ein Kraftfahrzeug (K), mit einem Gehäuse (10) und mit wenigstens einer das Gehäuse (10) nach außen abschließenden Lichtscheibe (11), durch die Lichtstrahlen (L) von hinter der Lichtscheibe (11) angeordneten Leuchtmitteln (13, 15) nach außen hindurchtreten können, wobei außen an der Lichtscheibe (11) ein ein Markenemblem (M) aufweisendes Bauteil (5) gehalten ist, derart, dass durch das Bauteil (5) die Lichtscheibe (11) teilweise überdeckt wird, wobei das Bauteil (5) lichtdurchlässige (5-1) und lichtundurchlässige Bereiche (5-2) aufweist, **dadurch gekennzeichnet, dass** ein Teil der hinter der Lichtscheibe (11) angeordneten Leuchtmittel (15) Bestandteil einer gesonderten Platine (14) ist, welche im Bereich des Bauteils (5) angeordnet ist, wobei die auf der Platine (14) angeordneten Leuchtmittel (15) von einem Rahmen (16) umgeben sind, der bis an die Lichtscheibe (11) herangeführt ist, derart, dass im Bereich des das Markenemblem (M) aufweisenden Bauteils (5) eine gesonderte Lichtkammer (6) gebildet wird.

2. Beleuchtungsvorrichtung (1) nach Anspruch 1, **dadurch gekennzeichnet, dass** die Stromversorgung der Platine (14) mit der Stromversorgung der Beleuchtungsvorrichtung (1) parallelgeschaltet ist.

3. Beleuchtungsvorrichtung (1) nach einem der vorhergehenden Ansprüche, **dadurch gekennzeichnet, dass** die Platine (14) und der Rahmen (16) weiß sind.

4. Beleuchtungsvorrichtung (1) nach einem der vorhergehenden Ansprüche, **dadurch gekennzeichnet, dass** wenigstens ein Teil der Leuchtmittel (15) in Richtung des Rahmens (16) abstrahlt.

5. Beleuchtungsvorrichtung (1) nach einem der vorhergehenden Ansprüche, **dadurch gekennzeichnet, dass** durch die Lichtscheibe (11) ein Aufnahmebereich (11-4) für das Bauteil (5) gebildet ist, der eine vertiefte Montagefläche (11-5) aufweist.

6. Beleuchtungsvorrichtung (1) nach Anspruch 5, **dadurch gekennzeichnet, dass** der Aufnahmebereich (11-4), das das Markenemblem (M) aufweisende Bauteil (5) und die gesonderte Platine (14) kreisrund und im Umriss in etwa gleich groß ausgebildet sind.

7. Kraftfahrzeug (K), **gekennzeichnet durch** wenigstens eine Beleuchtungsvorrichtung (1) nach einem der vorhergehenden Ansprüche.

8. Kraftfahrzeug (K) nach Anspruch 7, **dadurch gekennzeichnet, dass** die Beleuchtungsvorrichtung (1) an einer Klappe (3) des Kraftfahrzeugs (K) montiert und länglich ausgebildet ist, wobei sich die Beleuchtungsvorrichtung (1) über die gesamte Breite (b) der Klappe (3) erstreckt.

9. Kraftfahrzeug (K) nach Anspruch 8, **dadurch gekennzeichnet, dass** die Beleuchtungsvorrichtung (1) mit ihrem Gehäuse (10) in eine Vertiefung (30) der Klappe (3) eingelassen ist.

## Claims

1. Lighting apparatus (1) for a motor vehicle (K), comprising a housing (10) and at least one light plate (11) closing off the housing (10) to the outside, through which plate light rays (L) from lamps (13, 15) arranged behind the light plate (11) can pass to the outside, with a component (5) bearing a brand logo (M) being held on the outside of the light plate (11) such that the light plate (11) is partially covered by the component (5), the component (5) having translucent (5-1) and opaque regions (5-2), **characterized in that** some of the lamps (15) arranged behind the light plate (11) are part of a separate circuit board (14) which is arranged in the region of the component (5), the lamps (15) arranged on the circuit board (14) being surrounded by a frame (16) which extends to the light plate (11) in such a way that a separate light chamber (6) is formed in the region of the component (5) bearing the brand logo (M).

2. Lighting apparatus (1) according to claim 1, **characterized in that** the power supply of the circuit board (14) is connected in parallel with the power supply of the lighting apparatus (1).

3. Lighting apparatus (1) according to either of the preceding claims, **characterized in that** the circuit board (14) and the frame (16) are white.

4. Lighting apparatus (1) according to any of the preceding claims, **characterized in that** at least some of the lamps (15) emit in the direction of the frame (16).

5. Lighting apparatus (1) according to any of the preceding claims, **characterized in that** a receiving region (11-4) for the component (5) is formed by the light plate (11), which region has a recessed mounting surface (11-5).

6. Lighting apparatus (1) according to claim 5, **characterized in that** the receiving region (11-4), the component (5) bearing the brand logo (M) and the separate circuit board (14) are circular and are approximately the same size in outline.

7. Motor vehicle (K), **characterized by** at least one lighting apparatus (1) according to any of the preceding claims.

8. Motor vehicle (K) according to claim 7, **characterized in that** the lighting apparatus (1) is mounted on a panel (3) of the motor vehicle (K) and is elongate, the lighting apparatus (1) extending across the entire width (b) of the panel (3).

9. Motor vehicle (K) according to claim 8, **characterized in that** the lighting apparatus (1) together with its housing (10) is embedded into a recess (30) of the panel (3).

## Revendications

1. Dispositif d'éclairage (1) pour un véhicule automobile (K), comportant un boîtier (10) et comportant au moins une plaque d'éclairage (11) qui ferme le boîtier (10) vers l'extérieur et à travers laquelle des rayons lumineux (L) provenant de moyens d'éclairage (13, 15) agencés derrière la plaque d'éclairage (11) peuvent passer vers l'extérieur, dans lequel un composant (5) présentant un emblème de marque (M) est maintenu à l'extérieur sur la plaque d'éclairage (11), de telle sorte que la plaque d'éclairage (11) est partiellement recouverte par le composant (5), dans lequel le composant (5) présente des zones transparentes (5-1) et des zones opaques (5-2), **caractérisé en ce qu'**une partie des moyens d'éclairage (15) agencés derrière la plaque d'éclairage (11) fait partie d'une platine (14) séparée, qui est agencée dans la zone du composant (5), dans lequel les moyens d'éclairage (15) agencés sur la platine (14) sont entourés d'un cadre (16) qui s'étend jusqu'à la plaque d'éclairage (11), de telle sorte qu'une chambre lumineuse (6) séparée est formée dans la zone du composant (5) présentant l'emblème de marque (M).

2. Dispositif d'éclairage (1) selon la revendication 1, **caractérisé en ce que** l'alimentation en courant de la platine (14) est connectée en parallèle avec l'alimentation en courant du dispositif d'éclairage (1).

3. Dispositif d'éclairage (1) selon l'une des revendications précédentes, **caractérisé en ce que** la platine (14) et le cadre (16) sont blancs.

4. Dispositif d'éclairage (1) selon l'une des revendications précédentes, **caractérisé en ce qu'**au moins une partie des moyens d'éclairage (15) rayonne en direction du cadre (16).

5. Dispositif d'éclairage (1) selon l'une des revendications précédentes, **caractérisé en ce qu'**une zone de réception (11-4) pour le composant (5) est formée par la plaque d'éclairage (11) et présente une surface de montage en creux (11-5).

6. Dispositif d'éclairage (1) selon la revendication 5, **caractérisé en ce que** la zone de réception (11-4), le composant (5) présentant l'emblème de marque (M) et la platine (14) séparée sont de forme circulaire et de taille à peu près identique en contour.

7. Véhicule automobile (K) **caractérisé par** au moins un dispositif d'éclairage (1) selon l'une des revendications précédentes.

8. Véhicule automobile (K) selon la revendication 7, **caractérisé en ce que** le dispositif d'éclairage (1) est monté sur un volet (3) du véhicule automobile (K) et est réalisé de forme allongée, dans lequel le dispositif d'éclairage (1) s'étend sur toute la largeur (b) du volet (3).

9. Véhicule automobile (K) selon la revendication 8, **caractérisé en ce que** le dispositif d'éclairage (1) est encastré avec son boîtier (10) dans un renfoncement (30) du volet (3).
